# EUROPÄISCHE PATENTSCHRIFT

(11) **EP 1 378 730 B1**
(45) Veröffentlichungstag und Bekanntmachung des Hinweises auf die Patenterteilung: **14.03.2007**
(21) Anmeldenummer: 03014229.3
(22) Anmeldetag: 25.06.2003
(51) Int. Cl.: G01F 15/14, G01F 1/06

(54) **Flüssigkeitszähler mit einem Gehäuse aus Kunststoff, das von einem Blechmantel umhüllt ist**
Liquid meter with sheet metal enclosed plastic housing
Compteur de liquide avec boîtier en plastique enveloppé dans une chemise en tôle

(30) Priorität: 03.07.2002 DE 10229794
(43) Veröffentlichungstag der Anmeldung: 07.01.2004
(73) Patentinhaber: M & FC Holding LLC, Raleigh, NC 27 615 (US)
(72) Erfinder: Lang, Gerhard, 67134 Birkenheide (DE)
(74) Vertreter: Patentanwälte Möll und Bitterich

(56) Entgegenhaltungen:
- EP-A- 0 520 306
- EP-A- 0 682 234
- DE-U- 29 923 950
- GB-A- 644 087
- GB-A- 2 023 748

## Beschreibung

Die Erfindung betrifft Flüssigkeitszähler mit einem Gehäuse aus einem für Lebensmittel geeigneten Kunststoff gemäß dem Oberbegriff des Anspruchs 1.

Aus der FR 2 806 474 A ist ein ganz aus Kunststoff bestehendes Gehäuse für einen Flüssigkeitszähler bekannt. Um den im Betrieb auftretenden Drücken standhalten zu können, hat das Gehäuse große Wandstärken und eine spezielle, elliptische Form. Die Verarbeitung von Kunststoffen mit großen Wanddicken ist jedoch sehr zeitaufwändig, da der heiße Kunststoff in der Spritzgussform abkühlen muss, um Verformungen, die bei einem zu frühen Entformen auftreten, vermeiden zu können. Des weiteren muss der verwendete Kunststoff sowohl hochfest als auch für Lebensmittel geeignet sein, eine Kombination, die nur relativ wenige Kunststoffe erfüllen. Der hohe Materialpreis und die großen Wandstärken in Verbindung mit der relativ langen Herstellungszeit haben bisher verhindert, dass solche Kunststoffgehäuse die klassischen Metallgehäuse ablösen konnten.

Ein grundsätzliches Problem bei der Herstellung von Zählergehäusen aus Kunststoff ist die Tatsache, dass Kunststoff einem permanent angelegten Druck über kurz oder lang nachgibt.

Noch einen Schritt weiter geht der in der DE 299 23 950 U beschriebene Zähler für fließfähige Medien. Dieser besitzt anstelle eines konventionellen Rohranschlussgehäuses aus Messing ein mehrteiliges Rohranschlussgehäuse, das aus einem Gehäusetopf aus Blech, zwei Rohranschlussstutzen und einem Gewinde- oder Bajonettring aus Blech zusammengesetzt ist. Rohranschlussgehäuse verbleiben auch nach Ablauf der Eichdauer im Rohrnetz, damit nur das eigentliche Messteil ausgewechselt werden muss. Die Metallteile sind druckfest miteinander verschweißt. In das Rohranschiussgehäuse ist zunächst ein aus Kunststoff bestehender Gehäusetopf eingesetzt. Dieser Gehäusetopf besitzt angeformte Stutzen, die in die metallischen Rohranschlussstutzen eingeführt und gegen diese abgedichtet sind. Der Gehäusetopf nimmt dann den eigentlichen, ebenfalls aus Kunststoffteilen bestehenden Wasserzähler nach dem Messkapselprinzip auf, der seinerseits aus einem Topf und einem aufgesetzten Deckel besteht und in seinem Inneren ein Flügelrad besitzt. Alle wasserführenden Teile sind mit Hilfe von O-Ringen gegenseitig abgedichtet, um einen unerwünschten Austritt des Messmediums zu verhindern. Die Vielzahl von Einzelteilen, die Montage der Einzelteile und die notwendigen Dichtflächen machen diesen Zähler sehr aufwändig.

Bei der Konstruktion von Verbrauchszählem für das Lebensmittel Trinkwasser ist zu beachten, dass nur Materialien verwendet werden, die das Wasser nicht verunreinigen. Diese Forderung erfüllen die klassischen aus Messing bestehenden Zählergehäuse nicht, seit entdeckt wurde, dass sie kontinuierlich Metallionen, insbesondere Blei, in das Trinkwasser abgeben. Diesen Nachteil zu vermeiden, haben sich die vorstehend beschriebenen Verbrauchszähler zum Ziel gesetzt, die einerseits das Gehäuse komplett aus dickwandigem Kunststoff oder andererseits aus einer Kombination eines Zählergehäuses aus Kunststoff mit einem Rohranschlussgehäuse aus rostfreiem und schweißbarem Edelstahl zu lösen versuchen, wobei diese Lösungen jedoch, wie dargelegt, sehr aufwändig und kostspielig sind. Das ist unbefriedigend.

Der vorliegenden Erfindung liegt daher die Aufgabe zugrunde, einen Flüssigkeitszähler anzugeben, der weitaus einfacher konstruiert und sehr viel schneller und billiger herstellbar ist, und gleichzeitig die Forderungen der Trinkwasserverordnung erfüllt.

Diese Aufgabe wird gelöst durch einen Flüssigkeitszähler mit den Merkmalen des Anspruchs 1.

Wesentliche Vorteile der vorliegenden Erfindung sind zum einen die Tatsache, dass die Flüssigkeit keinerlei Kontakt mit irgendwelchen Metallteilen mehr bekommt, des weiteren die Tatsache, dass das flüssigkeitsgefüllte Gehäuse mit Ausnahme des Gehäuseoberteils aus einem Stück besteht, was die Herstellung vereinfacht, und dass alle von außen durch den Blechmantel gestützten Kunststoffteile sehr dünnwandig ausgeführt werden können, wodurch die Abkühlzeiten in der Spritzgussform sehr kurz werden. Der Blechmantel selbst kann bevorzugt durch spanlose Umformung hergestellt werden, beispielsweise im Tiefziehverfahren, wobei in einem einzigen Arbeitshub auch kompliziertere Formen möglich sind. Bei der Auswahl des Materials, aus dem der Blechmantel besteht, muss keine Rücksicht auf die chemischen Eigenschaften der Flüssigkeit genommen werden, da diese keinerlei Kontakt zum Metall hat.

Vorzugsweise besteht der Blechmantel aus zwei Teilen, einem Oberteil und einem Unterteil. Beide Teile können, wie schon erwähnt, im Tiefziehverfahren hergestellt werden.

Die Verbindung von Ober- und Unterteil des Blechmantels kann unlösbar ausgeführt werden, beispielsweise mittels Schweißnaht, Falz oder Niet.

Alternativ dazu ist auch eine lösbare Verbindung von Ober- und Unterteil denkbar, wobei diese Verbindung dann plombierbar ausgeführt sein sollte.

Gemäß einer bevorzugten Ausgestaltung der Erfindung besitzt das Gehäuseunterteil einen kreisförmigen Querschnitt, der Blechmantel dagegen einen rechteckigen bzw. quadratischen Querschnitt und eine passende Aufnahme für Gehäuseunterteil und Gehäuseoberteil. Dadurch können die Verbindungselemente, die Blechmantelober- und -unterteil miteinander verbinden, in den vier Ecken des Blechmantels positioniert werden.

Gemäß einer Weiterbildung ist es möglich, mit Hilfe des Blechmantels nicht nur das Gehäuseunterteil und das Gehäuseoberteil druckfest zu stützen, sondern auch die Einlass- und Auslassstutzen.

Vorteilhafterweise besteht der Blechmantel aus rostfreiem Metall, bevorzugt aus einem ferromagnetischen Metall. In diesem Fall dient der Blechmantel gleichzeitig als magnetische Abschirmung, was sich insbesondere bei Flüssigkeitszählern nach dem Trockenläuferprinzip empfiehlt, deren Permanentmagnete der Magnetkupplung auf diese Weise gegen verbotene Manipulationen abgeschirmt werden.

Gemäß einer Ausgestaltung der Erfindung ist der Flüssigkeitszähler ein Flügelradzähler. In diesem Fall sind an den Innenseiten von Gehäuseunterteil und/oder -oberteil hydraulische Einbauten, z. B. Staurippen, einstückig angeformt. Derartige Einbauten werden benötigt, um die Messkurve von Flügelradzählern zu linearisieren. Dadurch, dass diese hydraulischen Einbauten in einem Arbeitsgang mit dem Gehäuseunterteil bzw. Gehäuseoberteil hergestellt werden, werden die Herstellungskosten und -zeiten günstig beeinflusst.

Vorteilhafterweise ist in das Gehäuseunterteil und/oder Gehäuseoberteil auch ein Regulierkanal eingeformt. Da ein solcher Kanal in einem Arbeitsgang mit der Herstellung des jeweiligen Gehäuseteils und der hydraulischen Einbauten zur Linearisierung der Messkurve hergestellt werden kann, ergibt sich eine weitere Reduzierung der Herstellungskosten und -zeiten.

Gemäß einer Ausgestaltung der Erfindung sitzt im Zählergehäuse ein Regulierküken. Der Blechmantel besitzt an der Stelle eine Öffnung, durch die das Regulierküken zugänglich ist. Dabei ist der Durchmesser der Öffnung im Blechmantel kleiner als der Durchmesser des Regulierkükens, so dass dieses ohne weitere Maßnahmen in seiner Position verbleibt, für den Reguliervorgang im Werk jedoch zugänglich ist.

Vorteilhafterweise besitzen Gehäuseoberteil und/oder Blechmantel Einrichtungen für die zentrierte Montage eines Zählwerks. Dadurch wird sichergestellt, dass die Drehung des Flügelrads einwandfrei auf das Zählwerk übertragen wird.

Anhand der Zeichnung soll die Erfindung in Form eines Ausführungsbeispiels näher erläutert werden. Es zeigen
- Fig. 1: eine Draufsicht auf einen Flüssigkeitszähler,
- Fig. 2: eine Seitenansicht des Flüssigkeitszählers der Fig. 1,
- Fig. 3: einen Schnitt durch den Flüssigkeitszähler der Fig. 1 entlang der Linie III-III und
- Fig. 4: einen Längsschnitt durch das Zählergehäuse des Flüssigkeitszählers der Fig. 1.

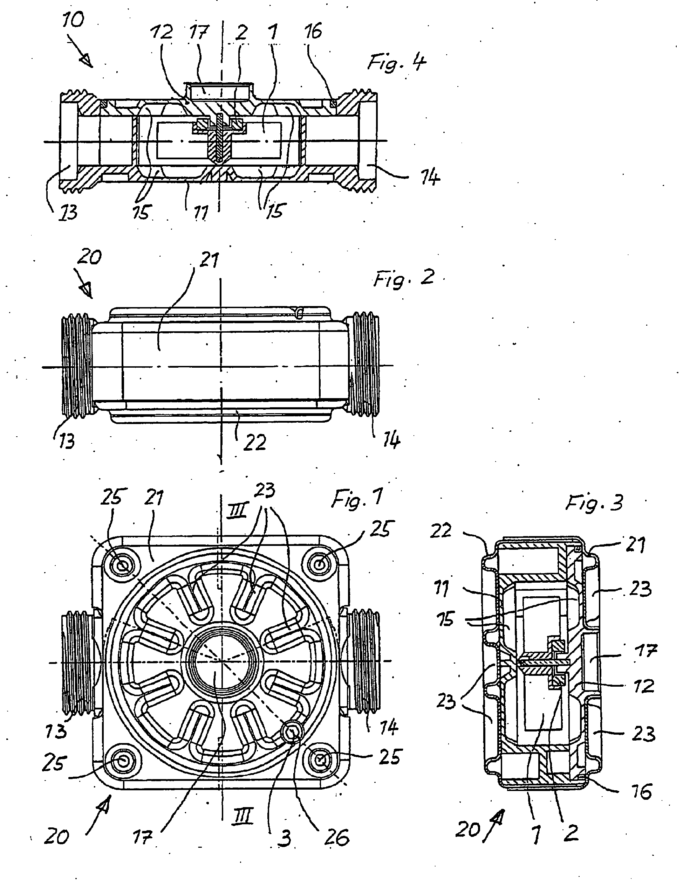

Fig. 1 als Draufsicht, Fig. 2 als Seitenansicht und Fig. 3 als Querschnitt entlang der Linie III-III in Fig. 1 zeigen einen Flüssigkeitszähler, hergestellt aus einem Kunststoffgehäuse 10 und einem das Kunststoffgehäuse 10 von außen druckfest stützenden Blechmantel 20. Einzelheiten des Kunststoffgehäuses 10 sind aus dem Längsschnitt in Fig. 4 erkennbar.

Das Zählergehäuse 10 besteht aus einem Gehäuseunterteil 11 mit einstückig angeformten Einlass- und Auslassstutzen 13, 14 und einem mittels O-Ring 16 flüssigkeitsdicht aufgesetzten Gehäuseoberteil 12. Im Inneren des Gehäuseunterteils 11 rotiert ein Flügelrad 1 mit Permanentmagneten 2. An der Innenseite des Gehäuseunterteils 11 und des Gehäuseoberteils 12 sind hydraulische Einbauten 15 angeformt, die der Linearisierung der Messkurve des Flügelrads 1 dienen.

An der Außenseite des Gehäuseoberteils 12 ist eine Einrichtung 17 angeformt, die die zentrierte Montage eines Zählwerks (nicht dargestellt) ermöglicht.

Der über das Zählergehäuse 10 gestülpte Blechmantel 20 besteht aus einem Oberteil 21 und einem Unterteil 22. Beide sind beispielsweise im Tiefziehverfahren hergestellt. Sie besitzen einen etwa quadratischen Querschnitt und sind so geformt, dass sie das Zählergehäuse 10 von außen stützen. In den Blechmantel 20 eingeformte Sicken 23 erhöhen dessen Festigkeit.

Wenn wie im vorliegenden Ausführungsbeispiel das Zählergehäuse 10 einen kreisrunden, der Blechmantel 20 dagegen einen quadratischen Querschnitt hat, lassen sich die Verbindungselemente 25, beispielsweise Nieten, in den vier Ecken des Blechmantels 20 positionieren.

Damit die Flüssigkeit mit keinerlei Metallteilen Kontakt bekommt, bestehen auch die Einlass- und Auslassstutzen 13, 14 aus Kunststoff. Dem muss durch Formgebung und insbesondere ausreichende Wandstärke des Kunststoffs Rechnung getragen werden.

Wie Fig. 1 zeigt, befindet sich in dem Oberteil 21 des Blechmantels 20 eine Öffnung 26, unter der sich ein Regulierküken 3 befindet. Dieses Regulierküken 3 taucht in einen Regulierkanal (nicht dargestellt) ein, der in das Gehäuseunterteil 11 eingeformt ist. Die Öffnung 26 im Oberteil 21 besitzt einen kleineren Durchmesser als das Regulierküken 3, so dass das Regulierküken 3 durch den Blechmantel 20 in seiner axialen Position gehalten wird, durch die Öffnung 26 hindurch jedoch zugänglich bleibt. Wird nach erfolgter Regulierung ein Zählwerk aufgesetzt, wofür im Gehäuseoberteil 12 die zentrale Aufnahme 17 eingeformt ist, überdeckt dieses die Öffnung 26 und das Regulierküken 3.

Wie die Figuren erkennen lassen, sind alle Kunststoffwände, die von außen durch den Blechmantel 20 gestützt werden, sehr dünn ausgeführt. Diese Kunststoffwände müssen lediglich flüssigkeitsdicht sein. Die Druckfestigkeit wird durch den Blechmantel 20 erreicht. Dünne Wandstärken benötigen nur wenig Kunststoffmaterial und nur kurze Abkühlzeiten in der Spritzgussform, so dass die Herstellung des erfindungsgemäßen Flüssigkeitszählers kosten- und zeitsparend erfolgen kann.

## Patentansprüche

1. Flüssigkeitszähler mit einem Zählergehäuse (10) aus einem für Lebensmittel geeigneten Kunststoff, im wesentlichen umfassend
- ein Gehäuseunterteil (11),
- einen Einlassstutzen (13)
- und einen Auslassstutzen (14)
- Gehäuseunterteil (11), Einlassstutzen (13) und Auslassstutzen (14) sind einstückig hergestellt,
- ein Gehäuseoberteil (12) verschließt das Gehäuseunterteil (11) flüssigkeitsdicht,
**gekennzeichnet durch** die Merkmale:
- das Zählergehäuse (10) ist von einem druckfesten Blechmantel (20) umhüllt,
- vom Blechmantel (20) gestützte Wände des Zählergehäuses (10) sind dünnwandig.

2. Flüssigkeitszähler nach Anspruch 1, **gekennzeichnet durch** das Merkmal:
- an den Innenseiten von Gehäuseunterteil (11) und/oder Gehäuseoberteil (12) sind hydraulische Einbauten, insbesondere Staurippen (15), einstückig angeformt.

3. Flüssigkeitszähler nach Anspruch 1 oder 2, **gekennzeichnet durch** das Merkmal:
- der Blechmantel (20) besteht aus einem Oberteil (21) und einem Unterteil (22).

4. Flüssigkeitszähler nach Anspruch 3, **gekennzeichnet durch** das Merkmal:
- Ober- und Unterteil (21, 22) sind mittels Schweißnaht, Falz oder Niet (25) unlösbar miteinander verbunden.

5. Flüssigkeitszähler nach Anspruch 3, **gekennzeichnet durch** die Merkmale:
- Ober- und Unterteil (21, 22) sind lösbar miteinander verbunden,
- die Verbindung ist plombierbar.

6. Flüssigkeitszähler nach einem der Ansprüche 3 bis 4, **gekennzeichnet durch** die Merkmale:
- Gehäuseunterteil (11) und/oder Gehäuseoberteil (12) besitzen einen kreisförmigen Querschnitt,
- der Blechmantel (20) besitzt
-- einen rechteckigen bzw. quadratischen Querschnitt
-- und eine Aufnahme für das Zählergehäuse (10),
- die Verbindungselemente (25), die Ober- und Unterteil (21, 22) miteinander verbinden, sind in den Ecken des Blechmantels (20) positioniert.

7. Flüssigkeitszähler nach einem der Ansprüche 1 bis 6, **gekennzeichnet durch** das Merkmal:
- der Blechmantel (20) stützt auch die Stutzen (13, 14).

8. Flüssigkeitszähler nach einem der Ansprüche 1 bis 7, **gekennzeichnet durch** das Merkmal:
- der Blechmantel (20) besteht aus rostfreiem, insbesondere aus ferromagnetischem Metall.

9. Flüssigkeitszähler nach einem der Ansprüche 1 bis 8, **gekennzeichnet durch** das Merkmal:
- in Gehäuseunterteil und/oder -deckel (11, 12) ist ein Regulierkanal eingeformt.

10. Flüssigkeitszähler nach einem der Ansprüche 1 bis 9, **gekennzeichnet durch** die Merkmale:
- im Zählergehäuse (10) sitzt ein Regulierküken (3),
- der Blechmantel (20) besitzt eine Öffnung (26), **durch** die das Regulierküken (3) zugänglich ist,
- der Durchmesser dieser Öffnung (26) ist kleiner als der Durchmesser des Regulierkükens (3).

11. Flüssigkeitszähler nach einem der Ansprüche 1 bis 10, **gekennzeichnet durch** das Merkmal:
- der Gehäusedeckel (12) und/oder der Blechmantel (20) besitzt Einrichtungen für die zentrierte Montage eines Zählwerks.

## Claims

1. Liquid meter with a meter housing (10) of a plastics material which is suitable for food, essentially comprising
- a housing lower part (11),
- an inlet connection piece (13)
- and an outlet connection piece (14),
- the housing lower part (11), inlet connection piece (13) and outlet connection piece (14) are made in one piece,
- a housing upper part (12) closes the housing lower part (11) in a liquid-tight manner,
**characterised by** the features:
- the meter housing (10) is encased by a pressure-proof sheet metal jacket (20),
- walls of the meter housing (10) which are supported by the sheet metal jacket (20) are thin-walled.

2. Liquid meter according to Claim 1, **characterised by** the feature:
- hydraulic fittings, in particular baffle ribs (15), are formed in one piece onto the inner sides of the housing lower part (11) and/or housing upper part (12).

3. Liquid meter according to Claim 1 or 2, **characterised by** the feature:
- the sheet metal jacket (20) consists of an upper part (21) and a lower part (22).

4. Liquid meter according to Claim 3, **characterised by** the feature:
- the upper and the lower part (21, 22) are joined together in an inseparable manner by means of a weld seam, a fold or a rivet (25).

5. Liquid meter according to Claim 3, **characterised by** the features:
- the upper and the lower part (21, 22) are joined together in a separable manner,
- the joint is sealable.

6. Liquid meter according to any one of Claims 3 to 4,
**characterised by** the features:
- the housing lower part (11) and/or the housing upper part (12) have/has a circular cross section,
- the sheet metal jacket (20) has
-- a rectangular or square cross section
-- and a receptacle for the meter housing (10),
- the joining elements (25) which join the upper and the lower part (21, 22) together are positioned in the corners of the sheet metal jacket (20).

7. Liquid meter according to any one of Claims 1 to 6,
**characterised by** the feature :
- the sheet metal jacket (20) also supports the connection pieces (13, 14).

8. Liquid meter according to any one of Claims 1 to 7,
**characterised by** the feature:
- the sheet metal jacket (20) consists of rust-resistant, in particular of ferromagnetic metal.

9. Liquid meter according to any one of Claims 1 to 8,
**characterised by** the feature:
- a regulating channel is formed into the housing lower part and/or cover (11, 12).

10. Liquid meter according to any one of Claims 1 to 9,
**characterised by** the features:
- a regulating plug (3) is seated in the meter housing (10),
- the sheet metal jacket (20) has an opening (26) through which the regulating plug (3) is accessible,
- the diameter of this opening (26) is smaller than the diameter of the regulating plug (3).

11. Liquid meter according to any one of Claims 1 to 10,
**characterised by** the feature:
- the housing cover (12) and/or the sheet metal jacket (20) have/has devices for the centred mounting of a counting mechanism.

## Revendications

1. Compteur de liquide comportant un boîtier (10) réalisé dans une matière plastique appropriée aux produits alimentaires, comportant pour l'essentiel :
- une partie inférieure de boîtier (11),
- une tubulure d'admission (13),
- et une tubulure de sortie (14),
- la partie inférieure de boîtier (11), la tubulure d'admission (13) et la tubulure de sortie (14) sont réalisées d'une seule pièce,
- une partie supérieure de boîtier (12) ferme la partie inférieure de boîtier (11),
**caractérisé par** les caractéristiques
- le boîtier (10) est entouré d'une enveloppe en tôle (20) résistante à la pression,
- les parois du boîtier (10) supportées par l'enveloppe en tôle (20) sont minces.

2. Compteur de liquide selon la revendication 1,
**caractérisé par** la caractéristique
- des chicanes hydrauliques, en particulier des nervures de retenue (15) sont formés d'un seul tenant contre les faces-intérieures de la partie inférieure de boîtier (11) et/ou de la partie supérieure de boîtier (12).

3. Compteur de liquide selon la revendication 1 ou 2, **caractérisé par** la caractéristique:
- l'enveloppe en tôle (20) est formée par une partie supérieure (21) et une partie inférieure (22).

4. Compteur de liquide selon la revendication 3,
**caractérisé par** la caractéristique :
- la partie supérieure (21) et la partie inférieure (22) sont assemblées de manière inamovible l'une à l'autre par un cordon de soudure, par sertissage ou par des rivets (25).

5. Compteur de liquide selon la revendication 3,
**caractérisé par** les caractéristiques :
- la partie supérieure (21) et la partie inférieure (22) sont assemblées de manière amovible,
- l'assemblage peut être plombé.

6. Compteur de liquide selon l'une quelconque des revendications 3 à 4, **caractérisé par** la caractéristique :
- la partie inférieure de boîtier (11) et/ou la partie supérieure de boîtier (12) ont une section circulaire,
- l'enveloppe en tôle (20) comporte
-- une section rectangulaire, ou encore carrée,
-- et un logement pour le boîtier (10) du compteur,
- les éléments d'assemblage (25), par lesquels la partie supérieure (21) et la partie inférieure (22) sont assemblées entre elles, sont positionnés dans les coins de l'enveloppe en tôle (20).

7. Compteur de liquide selon l'une quelconque des revendications 1 à 6, **caractérisé par** la caractéristique :
- l'enveloppe en tôle (20) supporte aussi les tubulures (13, 14).

8. Compteur de liquide selon l'une quelconque des revendications 1 à 7, **caractérisé par** la caractéristique :
- l'enveloppe, en tôle (20) est réalisée dans un matériau inoxydable, en particulier un métal ferromagnétique.

9. Compteur de liquide selon l'une quelconque des revendications 1 à 8, **caractérisé par** la caractéristique :
- un canal de régulation est formé dans la partie inférieure de boîtier (11) et/ou la partie supérieure de boîtier (12).

10. Compteur de liquide selon l'une quelconque des revendications 1 à 9, **caractérisé par** les caractéristiques :
- un boisseau régulateur (3) est logé dans le boîtier (10) du compteur,
- l'enveloppe en tôle (20) comporte un orifice (26) à travers lequel le boisseau régulateur (3) est accessible,
- le diamètre de cet orifice (26) est inférieur au diamètre du boisseau régulateur (3).

11. Compteur de liquide selon l'une quelconque des revendications 1 à 10, **caractérisé par** la caractéristique :
- la partie supérieure de boîtier (12) et/ou l'enveloppe en tôle (20) comportent des dispositifs pour le montage centré d'un mécanisme de comptage.
